# EUROPEAN PATENT APPLICATION

(11) **EP 2 738 371 A2**
(43) Date of publication of application: **04.06.2014**
(21) Application number: 13193675.9
(22) Date of filing: 20.11.2013
(51) Int. Cl.: F02C 9/26, F02C 9/28

(54) **A system and method for operating a gas turbine in a turndown mode**

(30) Priority: 30.11.2012 US 201213690284
(71) Applicant: General Electric Company, Schenectady, New York 12345 (US)
(72) Inventor: Ellis, George Allen, Greenville, SC 29615 (US); Thatcher, Jonathan Carl, Greenville, SC 29615 (US); Arnold, Robert Walter, Greenville, SC 29615 (US); Mariani, Michael John, Greenville, SC 29615 (US); Findlay, Chad Ernest, Greenville, SC 29615 (US)
(74) Representative: Picker, Madeline Margaret

(57) **Abstract**

A system for operating a thermal power plant 10 during off-peak demand intervals includes a gas turbine 12 having a compressor 18, a combustor 22 connected to a fuel control system 26, a turbine 30 and a sensor 62 configured to sense ambient conditions around the gas turbine 12. The fuel control system 26 and the sensor 62 are in communication with a controller 60. The controller 60 is configured to receive a user input that corresponds to a value for an operational boundary condition of the thermal power plant 10 and to monitor ambient conditions through the sensor 62. The controller 60 is further configured to generate a predicted emissions level value for the gas turbine 12 based on the monitored ambient conditions and to generate a command signal to adjust at least one operational parameter of the gas turbine 12 based at least in part on the predicted emissions level value and the value of the operational boundary condition of the thermal power plant 10.

## Description

The present invention generally relates to a system and a method for operating a gas turbine in a turndown mode.

Thermal power plants generally include at least one gas turbine having a compressor section, a combustion section downstream from the compressor section and a turbine section disposed downstream from the combustion section. The combustion section includes at least one combustor. A fuel and air mixture is burned within a combustion zone that is defined within the combustor, thereby producing a high velocity hot gas.

The hot gas is routed through a hot gas path and into the turbine section where thermal and kinetic energy is transferred from the hot gas to various stages of rotatable turbine blades which are coupled to a shaft, thereby causing the shaft to rotate. The shaft may be coupled to a load such as a generator to produce electricity. In a combined cycle thermal power plant, the hot gas may be routed from the turbine section to a heat recovery steam generation (HRSG) system disposed downstream from the turbine section. Thermal energy from the hot gas is transferred to a working fluid such as water to create steam to drive a steam turbine.

During peak-hours of load demand, particularly in a combined cycled thermal power plant, the gas turbine is operated at or near a peak-load or at a base-load condition. Peak-load and base-load operation generally corresponds to highest efficiency and emissions performance for the gas turbine and/or for the thermal power plant overall. During off-peak times, generally overnight, the load required from the generator may substantially decrease due to lower grid demand. As a result, it may be desirable to operate the gas turbine in a part-load or turndown condition by reducing fuel flow and/or air flow to the combustor.

As the load requirements of the gas turbine are decreased from base-load, the temperature of the hot gas produced in the combustor initially increases, then decreases. As a result of the decreased temperature of the hot gas, nitrogen oxide (NOx) emissions resulting from the combustion of the hydrocarbon fuels generally decrease. However, once the temperature of the hot gas falls below a certain temperature threshold, carbon monoxide (CO) can exceed permitted emissions levels. In addition, combined cycle operation requires that the hot gas exhausted from the turbine section be within a specific temperature range. For example, the exhaust temperature cannot be too high to avoid degrading a gas turbine exhaust duct and HRSG hardware, and the temperature should not fall below a certain temperature value to avoid a condition called forced cooling where thermal transients in a steam turbine rotor and casing can degrade the steam turbine rotor.

In order to operate the gas turbine in the turndown condition and to stay within emissions compliance, current power plant control systems require that an operator continuously monitor various gas turbine and thermal power plant operating parameters such as but not limited to emission levels, exhaust gas temperature, firing temperature, power output, ambient conditions, and/or changes in fuel quality. The operator is then required to make manual adjustments to various inputs to the gas turbine. For example, the operator may adjust air flow rate through the compressor section, modify fuel splits and/or adjust fuel flow rates to the combustor.

One issue with this approach is that there is typically a lag or delay in the data presented to the operator. As a result, the operator may make adjustments that overcompensate or undercompensate for the actual operational state of the gas turbine, thereby preventing the gas turbine from operating at a true minimum turndown condition. In addition, overcompensating or undercompensating the various inputs may prevent optimization of fuel usage during turndown, and may potentially result in the gas turbine falling out of emissions compliance. Accordingly, a method for automatically regulating the gas turbine so as to operate within emissions compliance at a minimum turndown condition while at a minimum fuel flow rate would be useful.

Aspects and advantages of the invention are set forth below in the following description, or may be obvious from the description, or may be learned through practice of the invention.

One embodiment of the present invention is a system for operating a thermal power plant during off-peak demand intervals. The system generally includes a gas turbine having a compressor, a combustor downstream from the compressor and a turbine downstream from the combustor. The combustor is connected to a fuel control system. A sensor is disposed within the thermal power plant. The sensor and the fuel control system are in communication with a controller. The controller is configured to receive a user input that corresponds to a value for an operational boundary condition of the thermal power plant. The controller is further configured to monitor ambient or process conditions using a sensor that is in communication with the controller. The controller is further configured to generate a predicted emissions level value for the gas turbine based on the monitored ambient conditions and to generate a command signal to adjust at least one operational parameter of the gas turbine based at least in part on the predicted emissions level value and the value of the operational boundary condition of the thermal power plant.

Another embodiment of the present invention is a method for transitioning a gas turbine of a thermal power plant from a non-turndown operating condition to a minimum turndown operating condition. The method includes receiving, at a controller, a user input corresponding to a value for an operational boundary condition of at least one of the gas turbine or the thermal power plant. A user inputs into the controller an instruction directing the gas turbine to transition from the non-turndown operating condition to a desired turndown operating condition. The controller monitors at least one ambient or process condition using a sensor that is in communication with the controller. The controller generates a predicted emissions level value for the gas turbine based on the monitored ambient condition. The controller then generates a command signal to adjust at least one operational parameter of the gas turbine as the gas turbine transitions to the minimum turndown operating condition. The command signal is based at least in part on the predicted emissions level value and the value of the operational boundary condition of the thermal power plant.

Another embodiment of the present disclosure includes a method for operating a gas turbine of a thermal power plant at a turndown condition. The method includes receiving, at a controller, a user input corresponding to a value for an operational boundary condition of the thermal power plant. The controller monitors at least one ambient or process condition using a sensor that is in communication with a controller. The controller generates a predicted emissions level value for the gas turbine based on the monitored ambient condition. The controller then generates a command signal to adjust at least one operational parameter of the gas turbine based at least in part on the predicted emissions level value and the value of the operational boundary condition of the thermal power plant.

Those of ordinary skill in the art will better appreciate the features and aspects of such embodiments, and others, upon review of the specification.

A full and enabling disclosure of the present invention, including the best mode thereof to one skilled in the art, is set forth more particularly in the remainder of the specification, including reference to the accompanying figures, in which:
Fig. 1 is a functional block diagram of an exemplary gas turbine within the scope of the present invention; and
Fig. 2 is a block diagram of a method for transitioning the gas turbine shown in Fig. 1 from a non-turndown operating condition to a turndown operating condition.

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. In addition, the terms "upstream" and "downstream" refer to the relative location of components in a fluid pathway. For example, component A is upstream from component B if a fluid flows from component A to component B. Conversely, component B is downstream from component A if component B receives a fluid flow from component A.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

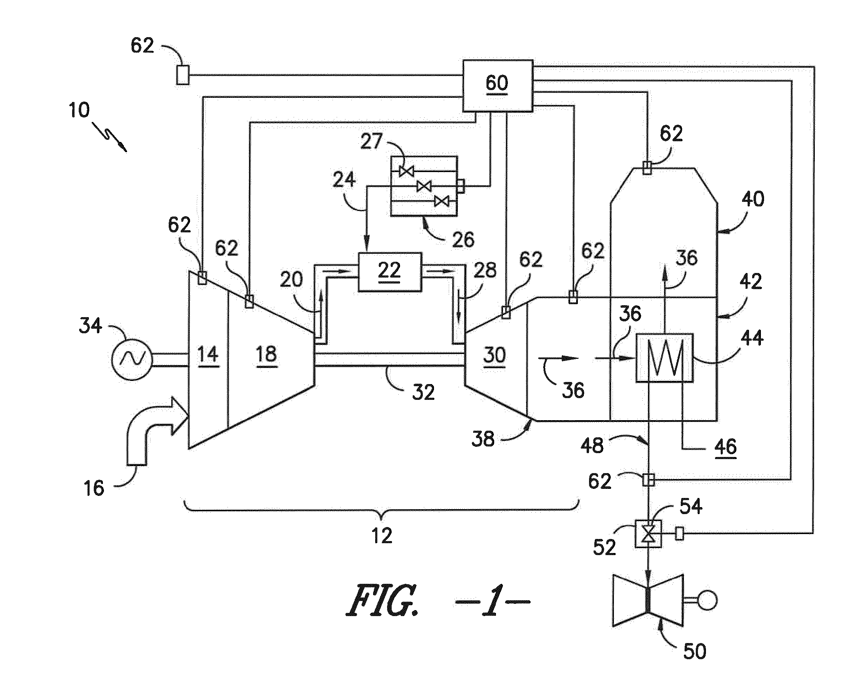

Now referring to the drawings. Fig. 1 provides a functional block diagram of a portion of an exemplary thermal power plant 10 used to generate electrical power as may be included in various embodiments of the present disclosure. As shown, the thermal power plant 10 generally includes a gas turbine 12. The gas turbine 12 generally includes an inlet plenum 14 that may include a series of filters, cooling coils, moisture separators, and/or other devices to purify and otherwise condition ambient air 16 entering the gas turbine 12. The ambient air 16 is routed from the inlet plenum 14 to a compressor 18, and the compressor 18 progressively imparts kinetic energy to the ambient air 16 to produce a compressed working fluid or air 20 at a highly energized state.

The compressed air 20 is progressively compressed to a higher pressure as it flows through the compressor 18 towards one or more combustors 22 where it mixes with a fuel 24 that is supplied by a fuel control system 26 having a at least one fuel control valve 27, thereby forming a combustible fuel-air mixture. The fuel-air mixture is burned to produce combustion gases 28 having a high temperature and pressure. Generally, the fuel control system 26 regulates the fuel flowing from a fuel supply to the combustor 22, the split between the fuel flowing into various fuel nozzles (not shown) disposed within the combustor 22, the fuel-air ratio, and may select the type of fuel for the combustor. The fuel control system 26 may be a separate unit or may be a component of a larger controller.

The combustion gases 28 flow through a turbine 30 to produce work. For example, a shaft 32 may connect the turbine 30 to the compressor 18 so that operation of the turbine 30 drives the compressor 18 to sustain operation of the gas turbine 10. Alternately or in addition, the shaft 32 may connect the turbine 30 and/or the compressor 18 to a generator 34 for producing electricity. Exhaust gases 36 from the turbine 30 flow through a turbine exhaust diffuser 38 that may connect the turbine 30 to an exhaust stack 40 that is downstream from the turbine 30. A heat recovery steam generator or HRSG 42 may be disposed between the exhaust gas diffuser 38 and the exhaust stack 40. The HRSG 42 may be used to scrub the exhaust gas of contaminates such as carbon monoxide (CO) and/or unburned hydrocarbons such as nitrogen oxides (NOx).

In particular embodiments, the HRSG 42 includes at least one heat exchanger 44 such as a recuperator to extract residual thermal energy from the exhaust gas 36 prior to release into the environment. The thermal energy is transferred to a steam supply line 46 that runs through the heat exchanger 44 to produce steam 48 to drive a steam turbine 50 or other auxiliary system associated with the thermal power plant 10. In a particular embodiment, a spray water steam attemperator 52 having a temperature control valve 54 is disposed between the heat exchanger 44 of the HRSG 42 and the steam turbine 50. The spray water steam attemperator 52 operates by injecting or spraying feed water into the steam path between the heat exchanger 44 of the HRSG 42 and the steam turbine 50 to de-superheat the steam flowing into the steam turbine, thereby reducing thermal stresses on the steam turbine 50.

In particular embodiments, a controller 60 is in communication with various sensors 62 that are disposed at various locations of the thermal power plant 10. In one embodiment, the controller 60 is a General Electric SPEEDTRONIC™ Gas Turbine Control System. The controller 60 may be a computer system having a processor(s) that executes programs to control the operation of the gas turbine using sensor inputs and instructions from human operators. The programs executed by the controller 60 may include scheduling algorithms for regulating fuel flow to the combustor 22. Command signals generated by the controller 60 cause actuators on the gas turbine to perform various functions relating to the operation and control of the gas turbine 12 and/or the thermal power plant 10. For example, the command signals may cause the actuators to adjust valves between the fuel supply 26 and the combustors 22 to regulate the flow rate of the fuel to the combustors 22. The controller 60 regulates the gas turbine 12, based in part, on algorithms stored in a computer memory of the controller 60. These algorithms enable the controller 60 to maintain compliance with the NOx and CO emissions requirements within certain predefined limits, and to maintain combustion firing temperatures to within predefined temperature limits.

During operation, the gas turbine 12 and/or the thermal power plant 10 may be monitored by several sensors 62 that are in communication with the controller 60. The sensors may be configured to detect various conditions of the gas turbine 12, the generator 34, the HRSG 42, the steam turbine 50 and/or the environment. For example, temperature sensors may monitor ambient temperature surrounding the gas turbine, compressor discharge temperature, turbine exhaust gas temperature, and other temperature measurements of the gas stream through the gas turbine. In addition, the temperature sensors may measure steam temperature between the HRSG 42 and the steam turbine 50. Pressure sensors may monitor ambient barometric pressure, static and dynamic pressure levels at the compressor inlet and outlet and turbine exhaust pressure. The pressure sensors may also be disposed at various other locations in the hot gas stream such as within the exhaust stack 40.

Humidity sensors, e.g., wet and dry bulb thermometers, measure ambient humidity in the inlet duct of the compressor. The sensors 26 may also comprise of flow sensors, speed sensors, flame detector sensors, valve position sensors, guide vane angle sensors, or the like that sense various parameters pertinent to the operation of gas turbine 10. As used herein, "parameters" and similar terms refer to items that can be used to define the operating conditions of the gas turbine 12, such as temperatures, pressures, and flow rates at defined locations in the gas turbine 12 that can be used to represent a given gas turbine 12 operating condition.

In at least one embodiment, the controller 60 is configured to receive a user input that corresponds to a value, limit or range for one or more operational boundary conditions of the thermal power plant to be maintained during turndown operation and/or while transitioning the gas turbine 12 into turndown operation. The inputted values or limits may be based on a maximum value and/or a minimum value for the corresponding boundary condition. In particular embodiments, the operational boundary limit corresponds to at least one of a maximum allowable carbon monoxide (CO) level of the exhaust gas 36, a maximum firing temperature of the combustor 22, a maximum temperature of the exhaust gas 36 or a maximum flow limit of the fuel control valves 27. In addition or in the alternative, the operational boundary limit may correspond to at least one of power output limit of the gas turbine 12, a maximum or minimum steam flow rate flowing to the steam turbine 50, power output of the steam turbine 50 or a maximum and/or a minimum steam temperature. In embodiments where multiple operational boundary condition values are inputted, the controller 60 may include an algorithm which prioritizes the operational boundary limits based on operator preference or power plant demands.

The software algorithm is designed such that the most limiting plant operational boundary becomes the loop in control, and thus the turbine control system will adjust fuel, air, temperature, and/or load to accommodate the boundary condition. Should the limiting boundary shift to another control loop, the control system will adjust automatically to ensure the least amount of fuel burn without violating any turbine or plant operational boundaries. An example of this function is an initial turndown operation on a CO limit, as the ambient and operating conditions change during an overnight operational scenario, the CO boundary may no longer be the most limiting condition, and now the unit is allowed to unload further to a point where another boundary becomes active such as a thermal limit imposed by the ability of the steam attemperation system to reduce inlet steam temperature to the steam turbine to within allowable limits. At this point, the gas turbine controls would operate along this boundary to achieve minimum fuel burn while maintaining steam temperature within limits.

The controller 60 may be configured to monitor various ambient conditions surrounding the thermal power plant 10 using at least one of the sensors 62 that are in communication with the controller 60. In at least one embodiment, the controller 60 is configured to monitor at least one of humidity, temperature or the barometric pressure of the ambient air 16 flowing into the compressor 16. In addition or in the alternative, the controller 60 may be configured to monitor an emissions performance variable such as at least one of carbon monoxide (CO) levels or nitrogen oxide (NOx) levels of the exhaust gas 36 flowing from the turbine 30.

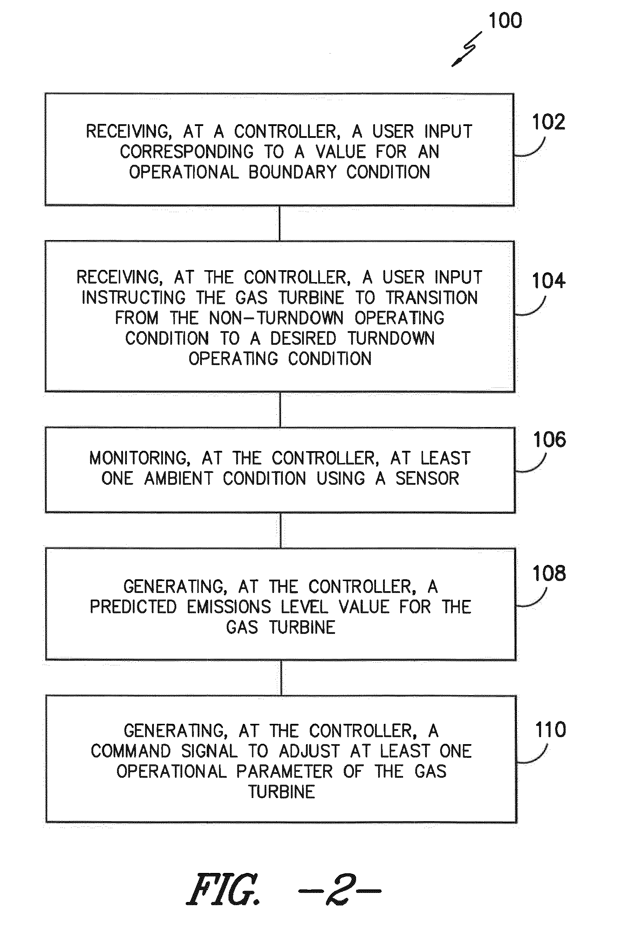

Fig. 2 depicts an exemplary method 100 for transitioning the gas turbine 12 of the thermal power plant 10 from a non-turndown operating condition to a turndown operating condition. The method 100 may be implemented using any suitable computing device such as the controller 60. In addition, although Fig. 2 depicts steps performed in a particular order for purposes of illustration and discussion, the steps of method 100 as discussed herein are not specifically limited to any particular order or arrangement. One skilled in the art, using the disclosures provided herein, will appreciate that various steps of the method 100 can be omitted, rearranged, repeated, combined and/or adapted in various ways.

At 102, the method generally includes receiving, at the controller, a user input corresponding to a value or limit corresponding to at least one of the operational boundary conditions of at least one of the gas turbine or the thermal power plant. As previously disclosed, the value for the operational boundary condition may correspond to at least one of a carbon monoxide emissions limit, a nitrogen oxide limit, a firing temperature limit, an exhaust gas temperature limit, a fuel control valve flow limit, a gas turbine power output limit, a steam flow limit, a steam turbine output limit or a steam attemperation temperature limit.

At 104, the method 100 includes receiving, at the controller 60, a user input that instructs the gas turbine 12 to communicate a command signal to the fuel control system 26 and/or other components/systems of the gas turbine 12 and/or the thermal power plant 10 to automatically transition the gas turbine 12 from the non-turndown operating condition to a desired turndown condition. The user/operator may initiate the input at a user interface of the controller 60.

At 106, the method includes monitoring, at the controller 60, at least one ambient condition using at least one sensor 62. As previously disclosed, the ambient condition may include at least one of humidity, temperature or barometric pressure of the ambient air 16 flowing into the compressor 18.

At 108, the method includes generating, at the controller, a predicted emissions level value for the gas turbine based on the monitored ambient conditions 106. The controller may utilize an algorithm including a transfer function or other mathematical derivation to generate the predicted emissions level value.

At 110, the method includes generating, at the controller, a command signal to progressively adjust at least one operational parameter of the gas turbine and/or the thermal power plant as the gas turbine transitions to the minimum turndown operating condition. The command signal is based at least in part on the predicted emissions level value and the value of the operational boundary condition of the thermal power plant. In at least one embodiment, the operational parameter of the gas turbine includes the fuel flow rate between the fuel control system and the combustor of the gas turbine. In addition or in the alternative, the operational parameter of the gas turbine may include the air flow rate of the ambient air 16 entering the compressor 18.

In further embodiments, the method further includes monitoring, at the controller, at least one emission performance variable using at least one sensor 62 in communication with the controller 60. In particular embodiments, the emissions performance variable includes at least one of carbon monoxide (CO) or nitrogen oxide (NOx) levels within the exhaust gas flowing from the turbine 30. In still further embodiments, the method includes monitoring, at the controller, the fuel composition of the fuel flowing between the fuel control system and the combustor using at least one sensor 62 in communication with the controller 60. In further embodiments, the method includes inputting, at the controller, a bias to affect or tune the predicted emissions level based at least in part on at least one of the monitored emissions level or the monitored fuel composition.

Once the gas turbine 12 has reached the desired or inputted turndown operating condition, the controller 60 may automatically maintain the gas turbine 12 by continuing to monitor the at least one ambient condition using the sensor. The controller 60 continuously to generate a predicted emissions level value for the gas turbine based on the monitored ambient conditions. The controller will automatically generate a command signal to continuously adjust the at least one operational parameter of the gas turbine based at least in part on the predicted emissions level value and the value of the operational boundary condition of the thermal power plant. In this manner, the gas turbine 12 may be maintained at the desired turndown operating condition throughout the desired period without operator input or monitoring.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. A system for operating a gas turbine of a thermal power plant during turndown intervals, the system comprising:
   a. a gas turbine having a compressor, at least one combustor downstream from the compressor and a turbine downstream from the combustor, the combustor being connected to a fuel supply control system; and
   b. a sensor disposed within the thermal power plant;
   c. a controller in communication with the sensor and the fuel supply control system, the controller being configured to:
      i. receive a user input corresponding to a value for an operational boundary condition of the thermal power plant;
      ii. monitor ambient conditions using the sensor;
      iii. generate a predicted emissions level value for the gas turbine based on the monitored ambient conditions; and
      iv. generate a command signal to adjust at least one operational parameter of the gas turbine, the command signal being based at least in part on the predicted emissions level value and the value of the operational boundary condition of the thermal power plant.
2. The system as in clause 1, wherein the value of the operational boundary condition corresponds to at least one of a carbon monoxide emissions limit, a nitrogen oxide limit, a firing temperature limit, an exhaust gas temperature limit, a fuel control valve flow limit, a gas turbine power output limit, a steam flow limit, a steam turbine output limit or a steam attemperation temperature limit.
3. The system as in any preceding clause, further comprising a second sensor in communication with the controller, the second sensor being configured to detect an emissions performance variable using the second sensor, the second sensor being in communication with the controller.
4. The system as in any preceding clause, wherein the sensor for monitoring the emissions performance variable is configured to detect at least one of carbon monoxide or unburned hydrocarbons.
5. The system as in any preceding clause, wherein the controller is configured to receive an inputted bias to affect the predicted emissions level based on the sensed emissions performance variable.
6. The system as in any preceding clause, wherein the at least one operational parameter of the gas turbine includes a fuel flow rate to a combustion section of the gas turbine or an air flow rate through a compressor section of the gas turbine.
7. A method for transitioning a gas turbine of a thermal power plant from a non-turndown operating condition to a minimum turndown operating condition, the method comprising:
   a. receiving, at a controller, a user input corresponding to a value for an operational boundary condition of at least one of the gas turbine or the thermal power plant;
   b. receiving, at the controller, a user input instructing the gas turbine to transition from the non-turndown operating condition to a desired turndown operating condition;
   c. monitoring, at the controller, at least one ambient condition using a sensor, the sensor being in communication with the controller;
   d. generating, at the controller, a predicted emissions level value for the gas turbine based on the monitored ambient condition; and
   e. generating, at the controller, a command signal to adjust at least one operational parameter of the gas turbine as the gas turbine transitions to the minimum turndown operating condition, the command signal being based at least in part on the predicted emissions level value and the value of the operational boundary condition of the thermal power plant.
8. The method as in any preceding clause, wherein receiving a user input corresponding to a value for an operational boundary condition comprises receiving at least one of a carbon monoxide emissions limit, a nitrogen oxide limit, a firing temperature limit, an exhaust gas temperature limit, a fuel control valve flow limit, a gas turbine power output limit, a steam flow limit, a steam turbine output limit or a steam attemperation temperature limit.
9. The method as in any preceding clause, further comprising monitoring, at the controller, an emissions performance variable using a sensor, the emissions performance variable including at least one of carbon monoxide or nitrogen oxide levels, the method further comprising inputting, at the controller, a bias to affect the predicted emissions level based on the monitored emissions performance variable.
10. The method as in any preceding clause, further comprising monitori ng, at the controller, a fuel composition of a fuel flowing to the gas turbine using a sensor, the sensor being in communication with the controller.
11. The method as in any preceding clause, further comprising inputting, at the controller, a bias to affect the predicted emissions level based on the monitored fuel composition.
12. The method as in any preceding clause, wherein the at least one operational parameter of the gas turbine comprises at least one of a fuel flow rate to the gas turbine or an air flow rate to the gas turbine.
13. A method for operating a gas turbine of a thermal power plant at a turndown condition, the method comprising:
   a. receiving, at a controller, a user input corresponding to a value for an operational boundary condition of the thermal power plant;
   b. monitoring, at the controller, at least one ambient condition using a sensor, the sensor being in communication with the controller;
   c. generating, at the controller, a predicted emissions level value for the gas turbine based on the monitored ambient condition; and
   d. generating, at the controller, a command signal to adjust at least one operational parameter of the gas turbine based at least in part on the predicted emissions level value and the value of the operational boundary condition of the thermal power plant.
14. The method as in any preceding clause, wherein receiving a user input corresponding to a value for an operational boundary condition comprises receiving at least one of a carbon monoxide emissions limit, a nitrogen oxide limit, a firing temperature limit, an exhaust gas temperature limit, a fuel control valve flow limit, a gas turbine power output limit, a steam flow limit, a steam turbine output limit or a steam attemperation temperature limit.
15. The method as in any preceding clause, further comprising monitoring, at the controller, at least one emissions performance variable using a sensor, the sensor being in communication with the controller.
16. The method as in any preceding clause, wherein monitoring an emissions performance variable comprises monitoring at least one of carbon monoxide or nitrogen oxide.
17. The method as in any preceding clause, further comprising inputting, at the controller, a bias to affect the predicted emissions level based on the sensed emissions performance variable.
18. The method as in any preceding clause, further comprising monitoring, at the controller, fuel composition of a fuel being supplied to the gas turbine using a sensor, the sensor being in communication with the controller.
19. The method as in any preceding clause, further comprising inputting, at the controller, a bias to affect the predicted emissions level based on the sensed fuel composition.
20. The method as in claim 13, wherein the at least one operational parameter of the gas turbine comprises a fuel flow rate or an air flow rate to the gas turbine.

## Claims

1. A system for operating a gas turbine (12) of a thermal power plant (10) during turndown intervals, the system comprising:
a. a gas turbine (12) having a compressor (18), at least one combustor (22) downstream from the compressor (18) and a turbine (30) downstream from the combustor (22), the combustor (22) being connected to a fuel supply control system (26); and
b. a sensor (62) disposed within the thermal power plant (10);
c. a controller (60) in communication with the sensor (62) and the fuel supply control system (26), the controller (60) being configured to:
i. receive a user input corresponding to a value for an operational boundary condition of the thermal power plant (10);
ii. monitor ambient conditions using the sensor (62);
iii. generate a predicted emissions level value for the gas turbine (12) based on the monitored ambient conditions; and
generate a command signal to adjust at least one operational parameter of the gas turbine (12), the command signal being based at least in part on the predicted emissions level value and the value of the operational boundary condition of the thermal power plant (10).

2. The system as in claim 1, wherein the value of the operational boundary condition corresponds to at least one of a carbon monoxide emissions limit, a nitrogen oxide limit, a firing temperature limit, an exhaust gas temperature limit, a fuel control valve flow limit, a gas turbine power output limit, a steam flow limit, a steam turbine output limit or a steam attemperation temperature limit.

3. The system as in claim 1 or claim 2, further comprising a second sensor (62) in communication with the controller (60), the second sensor being configured to detect an emissions performance variable using the second sensor, the second sensor (62) being in communication with the controller (60).

4. The system as in claim 3, wherein the sensor (62) for monitoring the emissions performance variable is configured to detect at least one of carbon monoxide or unburned hydrocarbons.

5. The system as in claim 3 or claim 4, wherein the controller (60) is configured to receive an inputted bias to affect the predicted emissions level based on the sensed emissions performance variable.

6. The system as in any preceding claim, wherein the at least one operational parameter of the gas turbine (12) includes a fuel flow rate to a combustion section of the gas turbine or an air flow rate through a compressor section of the gas turbine.

7. A method (100) for operating a gas turbine of a thermal power plant at a turndown condition, the method comprising:
a. receiving (102), at a controller, a user input corresponding to a value for an operational boundary condition of the thermal power plant;
b. monitoring (106), at the controller, at least one ambient condition using a sensor, the sensor being in communication with the controller;
c. generating (108), at the controller, a predicted emissions level value for the gas turbine based on the monitored ambient condition; and
d. generating (110), at the controller, a command signal to adjust at least one operational parameter of the gas turbine based at least in part on the predicted emissions level value and the value of the operational boundary condition of the thermal power plant.

8. The method as in claim 7, wherein receiving (102) a user input corresponding to a value for an operational boundary condition comprises receiving at least one of a carbon monoxide emissions limit, a nitrogen oxide limit, a firing temperature limit, an exhaust gas temperature limit, a fuel control valve flow limit, a gas turbine power output limit, a steam flow limit, a steam turbine output limit or a steam attemperation temperature limit.

9. The method as in claim 7 or claim 8, further comprising monitoring, at the controller, at least one emissions performance variable using a sensor, the sensor being in communication with the controller;
a. wherein monitoring an emissions performance variable preferably comprises monitoring at least one of carbon monoxide or nitrogen oxide, and/or
b. the method further comprises inputting, at the controller, a bias to affect the predicted emissions level based on the sensed emissions performance variable.

10. The method as in claim 7, 8 or 9, further comprising monitoring, at the controller, fuel composition of a fuel being supplied to the gas turbine using a sensor, the sensor being in communication with the controller, and, preferably, further comprising inputting, at the controller, a bias to affect the predicted emissions level based on the sensed fuel composition.

11. A method (100) for transitioning a gas turbine of a thermal power plant from a non-turndown operating condition to a minimum turndown operating condition, the method including the method as in any one of claims 7 to 10, comprising:
a. receiving (102), at a controller, a user input corresponding to a value for an operational boundary condition of at least one of the gas turbine or the thermal power plant;
b. receiving (104), at the controller, a user input instructing the gas turbine to transition from the non-turndown operating condition to a desired turndown operating condition;
c. monitoring (106), at the controller, at least one ambient condition using a sensor, the sensor being in communication with the controller;
d. generating (108), at the controller, a predicted emissions level value for the gas turbine based on the monitored ambient condition; and
e. generating (110), at the controller, a command signal to adjust at least one operational parameter of the gas turbine as the gas turbine transitions to the minimum turndown operating condition, the command signal being based at least in part on the predicted emissions level value and the value of the operational boundary condition of the thermal power plant.

12. The method as in claim 11, wherein receiving (104) a user input corresponding to a value for an operational boundary condition comprises receiving at least one of a carbon monoxide emissions limit, a nitrogen oxide limit, a firing temperature limit, an exhaust gas temperature limit, a fuel control valve flow limit, a gas turbine power output limit, a steam flow limit, a steam turbine output limit or a steam attemperation temperature limit.

13. The method as in claim 11 or claim 12, further comprising monitoring (106), at the controller, an emissions performance variable using a sensor, the emissions performance variable including at least one of carbon monoxide or nitrogen oxide levels, the method further comprising inputting, at the controller, a bias to affect the predicted emissions level based on the monitored emissions performance variable.

14. The method as in claim 11, 12 or 13, further comprising monitoring (106), at the controller, a fuel composition of a fuel flowing to the gas turbine using a sensor, the sensor being in communication with the controller, and, preferably, further comprising inputting, at the controller, a bias to affect the predicted emissions level based on the monitored fuel composition.

15. The method as in any one of claims 11 to 14, wherein the at least one operational parameter of the gas turbine comprises at least one of a fuel flow rate to the gas turbine or an air flow rate to the gas turbine.
